# EUROPÄISCHE PATENTANMELDUNG

(11) **EP 2 026 052 A2**
(43) Veröffentlichungstag der Anmeldung: **18.02.2009**
(21) Anmeldenummer: 08012530.5
(22) Anmeldetag: 10.07.2008
(51) Int. Cl.: G01J 3/46, G01J 3/52

(54) **Verfahren zur Herstellung von Farben**

(30) Priorität: 30.07.2007 DE 102007035610
(71) Anmelder: Ivoclar Vivadent AG, 9494 Schaan (LI)
(72) Erfinder: Kerschbaumer, Harald, 6833 Klaus (AT)
(74) Vertreter: Baronetzky, Klaus

(57) **Zusammenfassung**

Die Erfindung betrifft ein Verfahren (100) zur Herstellung von Farbelementen eines Farbschlüssels. Dazu werden zunächst Farbwerte bekannter Farbelemente (15) von Farbschlüsseln (10) mit ähnlichen Helligkeitswerten, Farbtönen und Chromata erfasst. In einem weiteren Verfahrensschritt werden die Farbwerte jedes neuen Farbelementes unter Vergrößerung eines Farbabstands (16) zwischen den Helligkeitswerten, Farbtönen und Chromata der zuvor erfassten Farbwerte bestimmt.

## Beschreibung

Die Erfindung betrifft ein Verfahren zur Herstellung Einzelfarbelementen eines Farbschlüssels, gemäß der Oberbegriff von Anspruch 1 sowie einen Farbschlüssel gemäß dem Oberbegriff von Anspruch 12, und insbesondere einen Farbschlüssel mit einer Mehrzahl von Einzelfarbelementen.

Auf dem Gebiet des Zahlersatzes gewinnt die Farbgestaltung von künstlichen Zähnen zunehmend an Bedeutung. Entsprechend der unterschiedlichen Farbgestaltungen von natürlichen Zähnen besteht für die Hersteller und Anbieter von Zahnersatz die Notwendigkeit, eine Vielzahl möglicher Farben anzubieten. Eine Farbauswahl unter 20 verschiedenen Farben stellt mittlerweile ein Mindestmaß dar, um den Bedürfnissen der Patienten Rechnung zu tragen.

Als Hilfsmittel für die Auswahl der Farbe künstlicher Zähne dienen so genannte Farbschlüssel. Derartige Farbschlüssel weisen einen Körper mit mehreren Einstecktaschen auf, in welche Farbauswahlstifte einsetzbar sind. Diese Farbauswahlstifte sind wiederum mit an einem Ende angebrachten Farbflächen versehen, die in ihrer Farbe insbesondere dem künstlichen Zahn entsprechen. Ferner weisen die Farbauswahlstifte (oder Farbstifte) einen Stiel auf, der in eine Einstecktasche einsteckbar ist.

Die Farbauswahlstifte können dann je nach Wunsch des Zahntechnikers oder Zahnarztes in beliebiger Weise zusammengestellt werden. Es ist auch bereits bekannt geworden, Farbschlüssel modular auszugestalten. Hierzu werden entsprechend einer gewissen Farbtönung ähnliche Farben in einem gemeinsamen Träger zusammengefasst auf dem Farbschlüssel gelagert.

Auf dem Gebiet des Zahnersatzes wird auch von den Farbschlüsseln "Vitapan Classic" und "Vita 3D-Master" der Firma Vita AG Gebrauch gemacht. Jeder dieser Farbschlüssel beinhaltet mehrere Farbgruppen, die sich hinsichtlich ihrer Farben (rötlich, gelblich, bräunlich und gräulich)voneinander unterscheiden. Innerhalb dieser Farbgruppen unterscheiden sich wiederum Farbmuster hinsichtlich ihrer Helligkeit.

Ein weiterer Farbschlüssel, der für die Farbgestaltung von künstlichen Zähnen heran gezogen wird, trägt die Bezeichnung "Chromascop" und beinhaltet 20 verschiedene Farbmuster. Zusammen mit dem Farbschlüssel "Vitapan Classic", der 16 verschiedene Farbmuster aufweist, ist es bereits möglich, künstliche Zähne, wie Schneidezähne, Seitenzähne oder Backenzähne, in 36 verschiedenen Farben zu produzieren.

In jüngster Vergangenheit sind jedoch Kundenwünsche dahingehend artikuliert worden, künstliche Zähne nach den Farbmustern des "Vita 3D-Master" zu gestalten. So bestimmen derzeit ca. 20 % der Zahnärzte in den USA die Zahnfarben mit dem "Vita 3D-Master".

Hieraus ergibt sich jedoch die Problematik, den neuen Farbschlüssel zu den bereits bestehenden Farbschlüsseln zu nehmen, mit der Folge, dass nochmals 26 neue Farben entwickelt und produziert werden müssten, die den Farben des "Vita 3D-Masters" entsprechen. Dies würde die Produktion und Bevorratung von künstlichen Zähnen in 62 verschiedenen Farben bedeuten, was nicht unerhebliche Kosten sowie ein unübersichtliches Ordnungsschema in den Farbschlüsseln verursachen würde.

Ausgehend von den dargelegten Nachteilen sowie unter Würdigung des aufgezeigten Standes der Technik bei Verfahren der eingangs genannten Art, liegt der vorliegenden Erfindung daher die Aufgabe zugrunde, ein Verfahren der eingangs genannten Art so auszubilden, dass die drei vorgenannten Farbschlüssel reproduzierbar sind, ohne von dem bereits erwähnten Farbschlüssel Gebrauch machen zu müssen, aber dennoch nicht eine Vielzahl von weiteren Farben für weitere Farbschlüssel bereithalten zu müssen.

Diese Aufgabe wird erfindungsgemäß durch Anspruch 1 gelöst. Vorteilhafte Weiterbildungen der Erfindung ergeben sich aus den Unteransprüchen.

Erfindungsgemäß wird ein Verfahren der eingangs genannten Art derart weitergebildet, dass zunächst Farbenwerte bekannter Farbelemente der Farbschlüssel mit ähnlichen Helligkeitswerten, Farbtönen und Chromata erfasst werden. Sodann werden Farbwerte jedes neuen Farbelements unter Vergrößerung eines Farbabstandes zwischen den Helligkeitswerten, Farbtönen und Chromata des zuvor erfassten Farbwertes bestimmt.

Der Erfindung liegt die Erkenntnis zugrunde, dass es vorteilhaft ist, von den Farbgruppen aller drei Farbschlüssel jene Farben zusammenzufassen, die im Wesentlichen gleich sind, sowie Approximationen in optimierter Weise vorzunehmen, um trotz der Reduktion der Farbwerteanzahl - gegenüber der Summe der Farbwerteanzahlen der drei Farbschlüssel - eine zumindest nicht verschlechtere Auswahl zu ermöglichen. Überraschend ermöglicht eine Vergrößerung der Farbabstände zwischen den Helligkeitswerten, Farbtönen und Chromata - und damit eine geringere Anzahl von Einzelfarbelementen - dennoch eine verbesserte Auswahl, und erleichtert zudem dem Zahntechniker oder Zahnarzt die Wahl.

Um sich eine genaue Übersicht über Ähnlichkeit der Farben der einzelnen Farbschlüssel, d. h. der Farbschlüssel "Chromascop", "Vitapan Classic" und "Vita 3D-Master" zu verschaffen, werden die Helligkeiten, Farbtöne und Chromata mittels spektroskopischer Untersuchungen ermittelt.

Mit Hilfe der gemessenen spektroskopischen Daten werden die Zähne im Rahmen der Erfindung in Gruppen sortiert, welche zuerst nach Helligkeit (L*), Farbton (a* bzw. b*) sowie Chroma (c*)die größten Ähnlichkeiten aufweisen.

Im Falle von ähnlichen Farben kann man von kaum unterscheidbaren Farbunterschieden sprechen, wenn der Farbabstand, d. h. der so genannte dimensionslose Delta E-Wert unter einer Einheit von 0,7 liegt. Auch Abweichungen bis zu einem Wert von Delta E 1,5 sind nur für das geübte Auge erkennbar. Die Werte sind hier dimensionslos angegeben. Als Größenarten für die Helligkeit, den Farbton, das Chroma sowie den Farbabstand können jedoch auch alle hierfür bekannten Größenarten Verwendung finden.

Im Falle, dass die Delta E-Werte den oben erwähnten Bereich abdecken, und sich dieses auch noch im visuellen Vergleich deckt, können diese sehr ähnlichen Farben zu einer Farbe zusammen gefasst werden.

Dies wird anhand des folgenden Beispiels noch einmal verdeutlicht:

| | **Farbe 1** | **Farbe 2** | **Farbe 3** | **Gemeinsame Farbe** |
|---|---|---|---|---|
| L* | 75.10/ DL *0.4* | 75.5/ DL *0* | 74.5/ DL *1* | 75.5 |
| a* | 1.02/ Da *0.08* | 0.72/Da *0.38* | 1.4/ Da *-0.3* | 1.1 |
| b* | 19.30/ Db *-0.4* | 19.40/Db *-0.5* | 18.1/ Db *0.8* | 18.9 |
| De | *0.57* | *0.62* | *1.3* | |

| | | | | |
|---|---|---|---|---|
| DL = Delta L*-Wert, der Unterschied zwischen dem L*-Wert der Farbe 1 und dem L*-Wert der gemeinsamen Farbe. Da = Delta a*-Wert, der Unterschied zwischen dem a*-Wert der Farbe 1 und dem a*-Wert der gemeinsamen Farbe. Db = Delta b*-Wert, der Unterschied zwischen dem b*-Wert der Farbe 1 und dem b*-Wert der gemeinsamen Farbe. De = Delta E-Wert ist die Summe von Delta L* a* b*. | | | | |

Auf diese Weise kann eine neue Farbe ohne Qualitätseinbuße alle drei Farben ersetzen. Auch visuell kann kaum ein Farbunterschied festgestellt werden.

Bei größeren Farbunterschieden kann man wie folgt vorgehen:

Die Farben werden nach Chroma gestaffelt angeordnet; d. h. die weniger chromatischen Farben stehen am Beginn, dann folgen die Farben mit höherem Chroma.

| Farbe | Opaker | Dentin |
|---|---|---|
| 1 | A | A |
| 2 | B | A |
| 3 | B | B |
| 4 | C | B |
| 5 | C | C |

Für die Farbe 1 wird jeweils ein Opaker (A) und ein Dentin (A) eingefärbt, für die Farbe 2, welche ja etwas intensiver ist, wird ein eigener Opaker (B) verwendet und das Dentin (A) der Farbe 1. Der genaue Farbton für die Farbe 2 kann über den Opaker gesteuert werden. Für die Farbe 3 wird derselbe Opaker (B) wir für die Farbe 2 verwendet, das höhere Chroma wird über ein eigenes Dentin (B) erzielt. Die Reihe kann so beliebig fortgesetzt werden.

Zudem sieht die Erfindung einen Farbschlüssel mit einer Mehrzahl von Einzelfarbelementen, die die Grundlage für die Herstellung von künstlichen Zähnen bildet, vor. Dazu sind die Farbwerte von an sich bekannten Farbsystemen oder Farbschlüsseln hinsichtlich ihrer Helligkeitswerte und/oder Farbtöne und/oder Chromata erfasst, wobei basierend auf den so erfassten Farbwerten die Farbwerte dann jedes neuen Einzelfarbelements zur Vergrößerung des Farbabstandes zwischen den Helligkeitswerten, Farbtönen und Chromata bestimmt sind.

In einer weiteren vorteilhaften Ausgestaltung ist es vorgesehen, dass die Helligkeiten, Farbtöne und Chromatader der bekannten Farbelemente mittels spektroskopischer Untersuchungen ermittelt werden.

In einer weiteren vorteilhaften Ausgestaltung ist es vorgesehen, dass die Erfassung der Farbwerte mit ähnlichen Helligkeitswerten aus den Farbschlüsseln Chromascop und/oder Vitapen Classig und/oder Vita 3D Master erfolgt.

In einer weiteren vorteilhaften Ausgestaltung ist es vorgesehen, dass für die neuen Farbwerte wenigstens eine Opaker- und/oder wenigstens eine Dentinfarbe eingefärbt werden, die gleich oder unterschiedlich eingefärbt sind.

In einer weiteren vorteilhaften Ausgestaltung ist es vorgesehen, dass die bekannten Farbelemente in Gruppen mit unterschiedlicher Helligkeit unterteilt werden, innerhalb welchen der Unterschied zwischen der Helligkeit jedes bekannten Farbelements zur durchschnittlichen Helligkeit jeder Helligkeitsgruppe 0,5 bis 2,5, insbesondere 0,5 bis 1,5, beträgt.

In einer weiteren vorteilhaften Ausgestaltung ist es vorgesehen, dass die bekannten Farbelemente innerhalb jeder Helligkeitsgruppe in Farbgruppen unterteilt werden, innerhalb welchen der Unterschied zwischen der Farbe und/oder Chroma jedes bekannten Farbelements zur durchschnittlichen Farbe und/oder zum durchschnittlichen Chroma jeder Farbgruppe 0,5 bis 2, insbesondere 0,5 bis 1, beträgt.

In einer weiteren vorteilhaften Ausgestaltung ist es vorgesehen, dass innerhalb des Farbraumes die Farbe jedes neuen Farbelements gegenüber den weiteren Farben innerhalb jeder Farbgruppe ähnliche Abstände aufweist.

In einer weiteren vorteilhaften Ausgestaltung ist es vorgesehen, der neue Farbschlüssel in 5 bis 9, insbesondere 7 Helligkeitsgruppen unterteilt ist.

In einer weiteren vorteilhaften Ausgestaltung ist es vorgesehen, dass der Farbschlüssel innerhalb jeder Helligkeitsgruppe wenigstens drei unterschiedliche Farbelemente aufweist.

In einer weiteren vorteilhaften Ausgestaltung ist es vorgesehen, dass die Farbelemente lösbar an einem Grundkörper des Farbschlüssels befestigt sind.

In einer weiteren vorteilhaften Ausgestaltung ist es vorgesehen, dass die Farbelemente wenigstens teilweise aus Dentalmaterial gefertigt sind.

In einer weiteren vorteilhaften Ausgestaltung ist es vorgesehen, dass jedes Farbelement mit einer Beschriftung und/oder Bezeichnung versehen ist.

Weitere Vorteile, Einzelheiten und Merkmale der Erfindung ergeben sich aus der nachfolgenden Beschreibung des Ausführungsbeispiels der Erfindung anhand der Zeichnung.

Es zeigt:

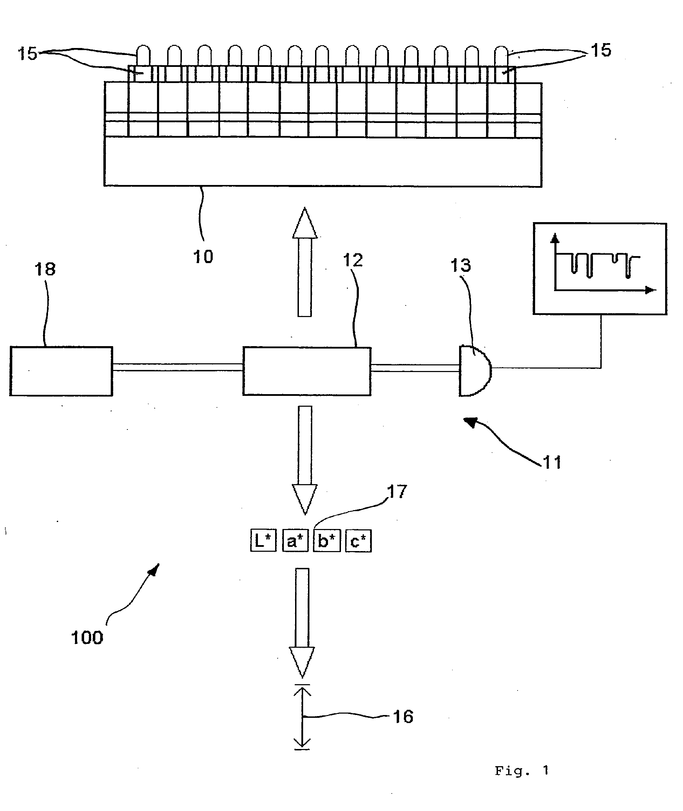

- Fig. 1: eine schematische Darstellung des erfindungsgemäßen Verfahrens.

Das in Fig. 1 schematisch dargestellte Verfahren 100 dient zur Herstellung von Einzelfarbelementen eines Farbschlüssels.

Das Verfahren 100 beginnt mit der Erfassung von Farbwerten von Farbelementen 15 bekannter Farbschlüssel 10 mit ähnlichen Helligkeitswerten, Farbtönen und Chromata. Bei den Farbschlüsseln 10 handelt es sich um die Farbschlüssel "Chromascop", "Vitapan Classic" und "Vita 3D-Master".

Um sich einen Überblick über Ähnlichkeiten der Farbwerte der Farbelemente 15 der einzelnen Farbschlüssel 10 untereinander zu verschaffen, werden die Helligkeiten, Farbtöne und Chromata der Farbwerte mit einem dafür geeigneten Spektrometer 11, welches eine Strahlungsquelle 18, die Probe 12 mit dem Farbwert der Farbe 14 sowie einen Detektor 13 aufweisen kann, vermessen.

Mit Hilfe dieser Daten werden die Zähne in Gruppen 17 sortiert, welche zuerst nach Helligkeit (L*), Farbton (a* bzw. b*) sowie Chroma (c*) die größten Ähnlichkeiten aufweisen.

In einem nächsten Schritt werden die Farbwerte jedes einzelnen Farbelementes 15 unter Vergrößerung des Farbabstandes 16 zwischen den Helligkeitswerten, Farbtönen und Chromata bestimmt. Eine Vergrößerung des Farbabstandes 16 impliziert dabei eine geringere Anzahl von Farbelementen.

Im Rahmen der Erfindung liegen kaum unterscheidbare Farbunterschiede vor, wenn der Farbabstand 16 unter einer Einheit von 0,7 liegt, wobei statt dieser dimensionslosen Größe auch die herkömmlich verwendeten Größen Verwendung finden können. Auch Abweichungen bis zu einem Wert des Farbabstandes 16 von 1,5 sind nur für das geübte Auge erkennbar.

Sind in dem Rahmen des erfindungsgemäßen Verfahrens die Werte der Farbunterschiede in diesem Bereich, können die sehr ähnlichen Farben zu einer Farbe zusammengefasst werden.

Es werden Farbabstände 16 ermittelt, die unter einer Einheit von 1,0 oder 2,0 liegen. Die Helligkeitswerte und die Chromata unterscheiden sich maximal um die Einheit 1,5, wohingegen der Unterschied bei den Farbtönen maximal bei der Einheit 1,0 liegen.

### Bezugszeichenliste:

- 100: Verfahren
- 10: Farbschlüssel
- 11: Spektrometer
- 12: Probe
- 13: Detektor
- 14: Farbe
- 15: Farbelement
- 16: Farbabstand
- 17: Gruppe
- 18: Strahlungsquelle

## Patentansprüche

1. Verfahren zur Herstellung von Farbelementen eines neuen Farbschlüssels mit folgenden Verfahrensschritten:
a) Erfassung von Farbwerten bekannter Farbelemente (15) von Farbschlüsseln (10) mit ähnlichen Helligkeitswerten, Farbtönen und Chromata
b) Bestimmung neuer Farbwerte für neue Farbelemente unter Vergrößerung eines Farbabstandes (16) zwischen den Helligkeitswerten und/oder Farbtönen und/oder Chromata der in Verfahrensschritt a) erfassten Farbwerte.

2. Verfahren nach Anspruch 1, **dadurch gekennzeichnet, dass** die Helligkeiten, Farbtöne und Chromatader der bekannten Farbelemente (15) mittels spektroskopischer Untersuchungen ermittelt werden.

3. Verfahren nach Anspruch 1 oder 2, **dadurch gekennzeichnet, dass** die Erfassung der Farbwerte mit ähnlichen Helligkeitswerten aus den Farbschlüsseln (10) Chromascop und/oder Vitapen Classig und/oder Vita 3D Master erfolgt.

4. Verfahren nach einem der Ansprüche 1 bis 3, **dadurch gekennzeichnet, dass** für die neuen Farbwerte wenigstens eine Opaker-und/oder wenigstens eine Dentinfarbe eingefärbt werden, die gleich oder unterschiedlich eingefärbt sind.

5. Verfahren nach einem der vorhergehenden Ansprüche 1 bis 4, **dadurch gekennzeichnet, dass** die bekannten Farbelemente (15) in Gruppen mit unterschiedlicher Helligkeit unterteilt werden, innerhalb welchen der Unterschied zwischen der Helligkeit jedes bekannten Farbelements (15) zur durchschnittlichen Helligkeit jeder Helligkeitsgruppe 0,5 bis 2,5, insbesondere 0,5 bis 1,5, beträgt.

6. Verfahren nach einem der vorhergehenden Ansprüche, **dadurch gekennzeichnet, dass** die bekannten Farbelemente (15) innerhalb jeder Helligkeitsgruppe in Farbgruppen unterteilt werden, innerhalb welchen der Unterschied zwischen der Farbe und/oder Chroma jedes bekannten Farbelements (15) zur durchschnittlichen Farbe und/oder zum durchschnittlichen Chroma jeder Farbgruppe 0,5 bis 2, insbesondere 0,5 bis 1, beträgt.

7. Verfahren nach einem der vorhergehenden Ansprüche, **dadurch gekennzeichnet, dass** innerhalb des Farbraumes die Farbe jedes neuen Farbelements gegenüber den weiteren Farben innerhalb jeder Farbgruppe ähnliche Abstände aufweist.

8. Farbschlüssel mit einer Mehrzahl von Einzelfarbelementen, die die Grundlage für die Herstellung von künstlichen Zähnen bilden, **dadurch gekennzeichnet, dass** die Farbwerte von an sich bekannten Farbschlüsseln (10) hinsichtlich ihrer Helligkeitswerte und/oder Farbtöne und/oder Chromata erfasst sind und basierend auf den so erfassten Farbwerten die Farbwerte jedes neuen Einzelfarbelements unter Vergrößerung des Farbabstandes (16) zwischen den Helligkeitswerten, Farbtönen und Chromata bestimmt wird.

9. Farbschlüssel nach Anspruch 8, **dadurch gekennzeichnet, dass** der neue Farbschlüssel in 5 bis 9, insbesondere 7 Helligkeitsgruppen unterteilt ist.

10. Farbschlüssel nach einem der Ansprüche 10 bis 13, **dadurch gekennzeichnet, dass** der Farbschlüssel innerhalb jeder Helligkeitsgruppe wenigstens drei unterschiedliche Farbelemente aufweist.

11. Farbschlüssel nach einem der Ansprüche 10 bis 14, **dadurch gekennzeichnet, dass** die Farbelemente lösbar an einem Grundkörper des Farbschlüssels befestigt sind.

12. Farbschlüssel nach einem der Ansprüche 10 bis 15, **dadurch gekennzeichnet, dass** die Farbelemente wenigstens teilweise aus Dentalmaterial gefertigt sind.

13. Farbschlüssel nach einem der Ansprüche 10 bis 16, **dadurch gekennzeichnet, dass** jedes Farbelement mit einer Beschriftung und/oder Bezeichnung versehen ist.

14. Verfahren zur Herstellung von Dentalmateralien nach dem in den Patentansprüchen 1 bis 13 beschriebenen Verfahren.
